Europäisches Patentamt

European Patent Office

Office européen des brevets

(19)

(11) Publication number: 0 398 650
A2

# EUROPEAN PATENT APPLICATION

(21) Application number: 90305223.1

(22) Date of filing: 15.05.90

(51) Int. Cl.⁵: G06F 15/40

(30) Priority: 15.05.89 US 352088

(43) Date of publication of application:
22.11.90 Bulletin 90/47

(84) Designated Contracting States:
DE FR GB

(71) Applicant: International Business Machines
Corporation
Old Orchard Road
Armonk, N.Y. 10504(US)

(72) Inventor: Elliott, Linda Carolyn
1602 Springer Lane
Austin, Texas 78758(US)
Inventor: Garrison, Jane Ransom
12228 Antoinette
Austin, Texas 78727(US)
Inventor: Jordan, Lloyd Eugene II
13505 Bayswater Garden
Austin, Texas 78729(US)

(74) Representative: Bailey, Geoffrey Alan
IBM United Kingdom Limited Intellectual
Property Department Hursley Park
Winchester Hampshire SO21 2JN(GB)

(54) Data structure construction.

(57) A method and apparatus are disclosed for the construction of complex data structures for use in efficient communications between a server (19, 20) and a requester (12, 30) in a database management system. The complex data structures may typically include fixed length static components, fixed length dynamic components and variable length dynamic components. Multiple fixed length data templates (36) are created, each of which preferably includes at least one fixed length static component mapped therein. Selected data templates may also include at least one empty field or "hole" into which a fixed length dynamic component may be mapped. Associated with each such selected data template is a replacement table (42) which contains an entry for each empty field within the data template and the characteristics of the fixed length dynamic component which is to be mapped into that empty field. A second table (48) is provided for each fixed length dynamic component which specifies the source of that dynamic component. In a preferred embodiment of the present invention the source thus specified may be a direct reference to an address location or an indirect reference, such as a reference to a function which may be utilized to calculate the dynamic component. Thus, by selecting an appropiate data template which includes at least one static component mapped therein and subsequently utilizing its associated tables to determine the dynamic components which will be mapped into the template it is possible to efficiently create a complex data structure. Such complex data structures may be then be linked to individual variable length dynamic components to create a complex data structure having any desired combination of data components.

Fig. 5

# DATA STRUCTURE CONSTRUCTION

This invention relates in general to the creation of complex data structures for use in efficient communications between multiple computer entities, and in particular to the efficient creation of complex data structures from fixed length static components, fixed length dynamic components and variable length dynamic components. Still more particularly, the present invention relates the creation of complex data structures for use by remote data services in the transmission of database kernel requests.

Data processing systems are well known in the prior art. In recent years such systems have grown increasingly complex and often include multiple computer entities linked together in various network configurations. These so-called distributed computing systems offer the advantage of greatly enhancing the apparent power and complexity of a single computer by allowing that computer to access remotely located data and processing capability.

As distributed computing systems have become more common, and as personal computers increase in power and complexity, it is increasingly common to see large amounts of data being circulated between two computer entities coupled together by such a network. One common example of this technique may be seen in the utilization of a remote database by multiple users. Database requests or "queries" are made by many different computer entities or "requesters" and are routed to a second computer entity or "server" which utilizes a database management system to obtain the requested data. This data is then transmitted back to the requester via the network.

The increased speed and complexity of personal computers and interactive work stations has resulted in a concomitant increase in the amount of data which must be transmitted between two computer entities in such a system. Existing data processing systems transmit these complex data structures by sequentially retrieving and coupling individual data components together in a batch processing mode. This must be accomplished anew for each attempt at communication whether or not substantial portions of the data structures are depicted.

Viewed from one aspect the invention provides a method for creating data structures from multiple data components which include fixed length static components and fixed length dynamic components for transmittal between a server and a requester in a database management system, said method comprising the steps of: creating a plurality of data templates each including at least one fixed length static component mapped therein;

creating at least one characteristic table having characteristics of at least one fixed length dynamic component stored therein; accessing a particular one of said plurality of data templates; accessing said at least one characteristic table to determine the characteristics of said at least one fixed length dynamic component stored therein; and mapping said at least one fixed length dynamic component into said particular one of said plurality of data templates in accordance with said stored characteristics to create a data structure for transmittal between said server and said requester.

As an example, the present invention may be utilized to create complex data structures for use in efficient communication between a server and a requester in a database management system. The complex data structures may typically include fixed length static components, fixed length dynamic components and variable length dynamic components. Multiple fixed length data templates are created, each of which includes at least one fixed length static component mapped therein. Selected data templates also include at least one empty field or "hole" into which a fixed length dynamic component may be mapped. Associated with each such selected data template is a replacement table which contains an entry for each empty field within the data template and the characteristics of the fixed length dynamic component which is to be mapped into that empty field. A second table is preferably provided for each fixed length dynamic component which specifies the source of that dynamic component. In a preferred embodiment of the present invention the source thus specified may be a direct reference to an address or an indirect reference, such as a reference to a function which may be utilized to calculate the dynamic component. Thus, by selecting an appropriate data template which includes at least one static component and subsequently utilizing its associated tables to determine the dynamic components which will be mapped into the template, it is possible to efficiently create a complex data structure. Such complex data structures may then be linked to individual variable length dynamic components to create a complex data structure having any desired combination of data components.

Viewed from another aspect the invention provides a data processing apparatus having means for creating data structures from multiple data components which include fixed length static components and fixed length dynamic components for transmittal between a server and a requester in a database management system, comprising:

memory logic storing a plurality of data templates each including at least one fixed length static component map and at least one characteristic table having characteristics of at least one fixed length dynamic component;

means for accessing a particular one of said plurality of data templates, and said at least one characteristic table to determine the characteristics of said at least one fixed length dynamic component stored therein; and

means for mapping said at least one fixed length dynamic component into said particular one of said plurality of data templates in accordance with said stored characteristics to create a data structure for transmittal between said server and said requester.

An embodiment of the invention will now be described, by way of example only, with reference to the accompanying drawings in which:

Figure 1 is a pictorial representation of a data processing system which may be utilized to implement the present invention;

Figure 2 is a pictorial representation of a data template which may be utilized with the present invention;

Figure 3 is a pictorial representation of a replacement table which may be utilized with the present invention;

Figure 4 is a pictorial representation of a source specification table which may be utilized with the present invention; and

Figure 5 is a logic flow chart which illustrates the operations utilized by the present invention.

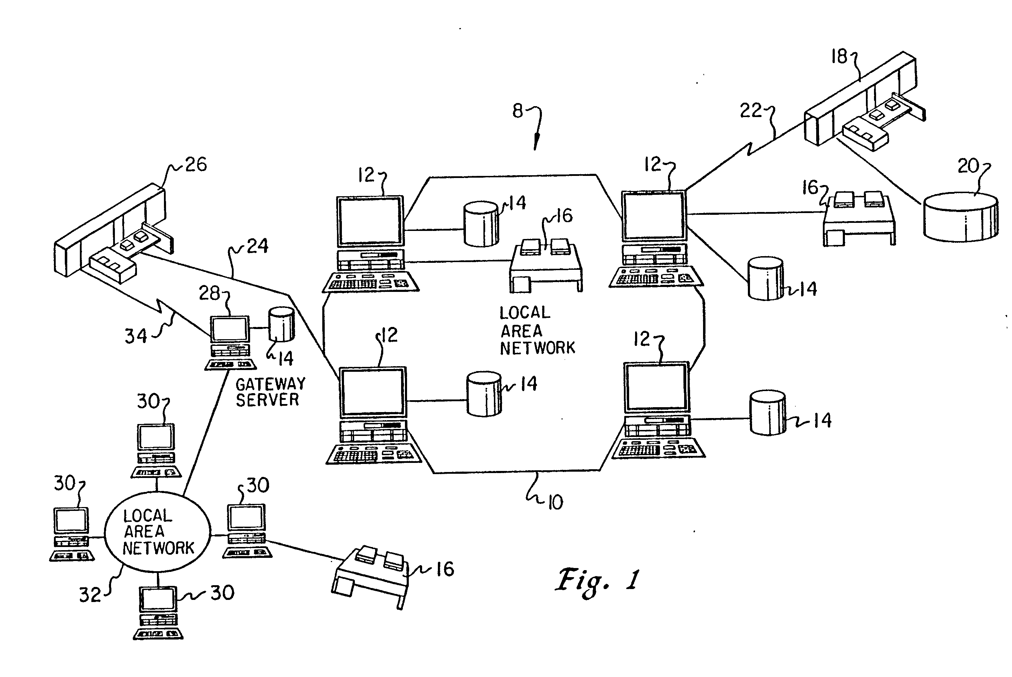

With reference now to the figures, and in particular with reference to Figure 1, there is depicted a pictorial representation of a data processing system 8 which may be utilized to implement the method of the present invention. As may be seen, data processing system 8 may include a plurality of networks, such as Local Area Networks (LAN) 10 and 32, each of which preferably includes a plurality of individual computers 12 and 30, respectively. A plurality of Interactive Work Stations (IWS) coupled to a host processor may be utilized for each such network.

As is common in such data processing systems, each individual computer may be coupled to a storage device 14 and/or a printer/output device 16. One or more such storage devices 14 may be utilized, in accordance with the present invention, to store data templates, replacement tables and source specification tables which may be utilized, in accordance with the present invention, to create a complex data structure for efficient communication between a first computer and a second computer.

Still referring to Figure 1, it may be seen that data processing network 8 may also include multiple main frame computers, such as main frame computer 18, which may be preferably coupled to Local Area Network (LAN) 10 by means of communications link 22. Main frame computer 18 may also be coupled to a storage device 20 which may serve as remote storage for Local Area Network (LAN) 10. Similarly, Local Area Network (LAN) 10 may be coupled via communications link 24 through a subsystem control unit/communications controller 26 and communications link 34 to a gateway server 28. Gateway server 28 is preferably an individual computer or Interactive Work Station which serves to link Local Area Network (LAN) 32 to Local Area Network (LAN) 10.

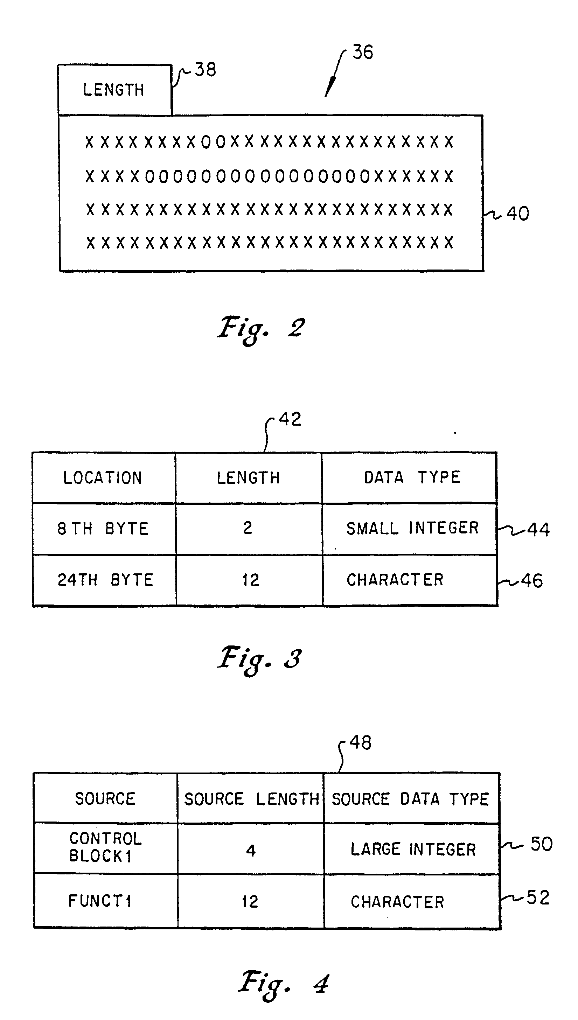

Referring now to Figure 2, there is depicted a pictorial representation of a data template 36 which may be utilized with the present invention. As may be seen, data template 36 preferably includes a length field 38, which is utilized to contain an indication of the total length in bytes of data template 36. The remainder of data template 36 comprises data field 40. Within data field 40 is mapped at least one fixed length static component. By static components what is meant are data structures which are fixed in nature such as code points, the lengths of fixed-length segments, etc. Each static component within data field 40 is represented within Figure 2 by a consecutive series of the letter "X." As may be seen, in the depicted data template of Figure 2, data field 40 includes three fixed length static components.

Also depicted within data field 40 are two empty fields or "holes," each illustrated by a consecutive series of the letter "O." Each of these empty fields is provided to permit a fixed length dynamic component to be mapped therein. By dynamic components what is meant are data structures which are variable in nature. While only one data template 36 is depicted, it will be appreciated that the present invention contemplates the utilization of multiple such data templates, each designed for a particular application.

With reference now to Figure 3, there is depicted a pictorial representation of one replacement table 42 which may be utilized in conjunction with a data template 36 in accordance with the present invention. As may be seen, replacement table 42 includes a row which corresponds to each empty field within data template 36 of Figure 2. That is, row 44 which corresponds to the first empty field therein and row 46 which corresponds to the remaining empty field within data template 36. As is illustrated, each row is further divided into three columns. The first column corresponding to the location of the empty field within data template 36 which will be filled by the fixed length dynamic component described within that row. The second column includes the length of the empty field and the third column recites the data type of the fixed length dynamic component.

Thus, in the illustrated embodiment of the present invention, row **44** indicates that the empty field located at the eighth byte of data template **36,** which is two bytes in length, will be filled by a small integer data type. Similarly, row **46** indicates that the empty field located at the twenty-fourth byte, which is twelve bytes in length, will be filled by a dynamic component which is a character string.

Referring now to **Figure 4,** there is depicted a pictorial representation of a source specification table **48** which is utilized in conjunction with replacement table **42** of **Figure 3,** in accordance with the method of the present invention. As above, source specification table **48** includes a plurality of rows, each of which corresponds to a row of replacement table **42.** That is, row **50** of source specification table **48** corresponds to row **44** of replacement table while row **52** of source specification table **48** corresponds to row **46** of replacement table **42.**

Each row within source specification table **48** is further divided into a plurality of columns. The first column in each row identifies the source of the dynamic component which the replacement table indicates should be mapped into data template **36.** The next column specifies the length of the source and the third column identifies the source data type.

Therefore, in the illustrated embodiment of the present invention, according to the information contained within row **50** of source specification table **48,** "control block1" is the source location for the small integer dynamic component which will be mapped into the eighth byte of data template **36.** However, the length and source data type listed in row **50** of source specification table **48** do not match the length and data type within row **44** of replacement table **42.** In the disclosed embodiment of the present invention this may occasionally occur. In such conditions, the present invention will automatically utilize a conversion process which, in this case, will convert a four byte large integer data type into a two byte small integer data type, as specified by row **44** of replacement table **42.**

Row **52** of source specification table **48** illustrates another important feature of the method of the present invention. As depicted, the source for the required twelve byte character string is listed as "function1." This is referred to herein as an indirect source. That is, a reference to a function which must be utilized to calculate the value of the dynamic component before it may be mapped into data template **36.** Thus, it should be apparent that source specification table **48** may be utilized, in combination with replacement table **42,** to list each necessary characteristic of a fixed length dynamic component which will be mapped into data template **36** to efficiently create a complex data structure for transmittal between two computer entities.

By utilizing the above-described table methodology it is possible to create a plurality of templates which each contain various combinations of fixed components and "holes" for the insertion of fixed length dynamic components. By simply linking such templates, after the "holes" have been filled, with individual variable length data structures it will be possible to efficiently create a complex data structure which includes any combination of fixed length static components, fixed length dynamic components and variable length dynamic components.

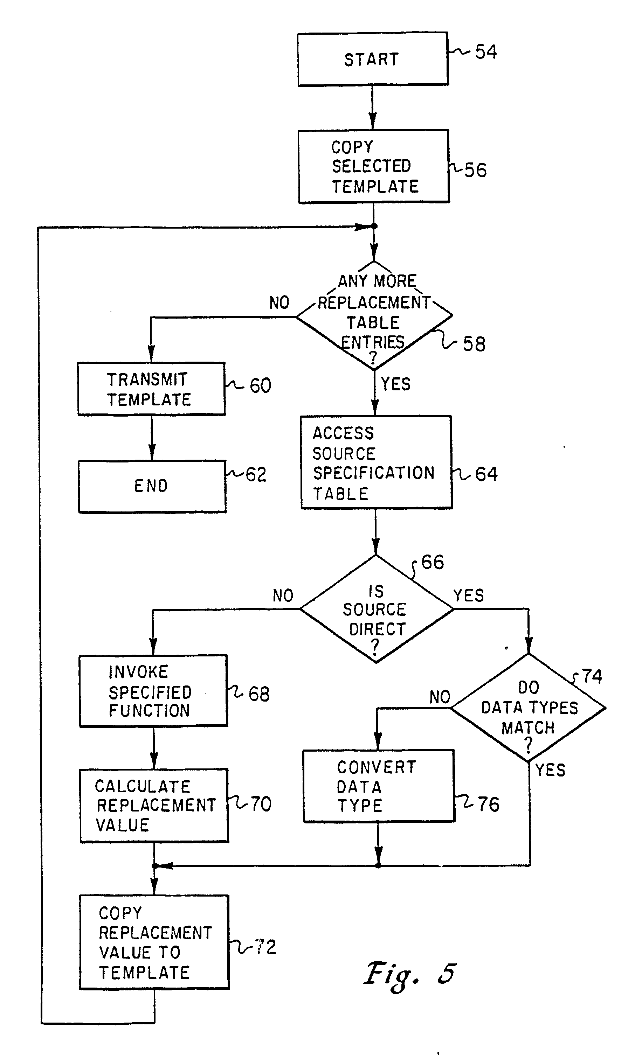

Finally, with reference to **Figure 5,** there is depicted a logic flow chart which illustrates the above. The process begins with start block **54** which is invoked in the event that one computer entity desires to create a complex data structure for transmittal to a second computer entity. Thereafter, block **56** illustrates the copying of a selected data template which is chosen in response to the nature of the complex data structure which is desired.

Next, block **58** illustrates a determination of whether or not any replacement table entries exist for the selected template. In a degenerate case of the present method it is possible to create a data template which contains only fixed length static components and therefore will not require the utilization of the replacement table illustrated in **Figure 3.** In the event no initial or additional replacement table entries are present, then block **60** illustrates the transmission of the data template along with any variable length dynamic component which is required and the process terminates, as illustrated in block **62.** In the event an initial replacement table entry or an additional replacement entry table does exist, indicating that a fixed length dynamic component must be mapped into the selected template, then block **64** illustrates the accessing of the source specification table (see **Figure 4**).

Next, block **66** illustrates a determination of whether or not the source listed within the source specification table is a direct source.

If the source listed is not a direct source, then block **68** depicts the invoking of the specified function. Thereafter, block **70** illustrates the calculation of the replacement value and block **72** depicts the copying of that replacement value into the designated empty field within the data template. Thereafter, the process returns to block **58** to determine whether or not any additional replacement table entries must be satisfied to completely fill the data template.

Referring again to block **66,** in the event the source listed within the source specification table is a direct source, then block **74** illustrates a determination of whether or not the data type listed within the source specification table matches the data type listed within the replacement table. If not, block **76** illustrates the conversion of the data type to the appropriate data type, as discussed above with respect to small integer and large integer data types. Thereafter, the converted data type is copied to the empty field within the data template, as illustrated by block **72.** Similarly, in the event the data type listed within the source specification table matches the data type listed within the corresponding row in the replacement table, the process proceeds directly from block **74** to block **72.**

Upon reference to the foregoing specification those skilled in the art will appreciate that communication of complex data structures between two computer entities may be accomplished in a more efficient manner by the creation of data templates and the linking of those templates to variable length dynamic components in accordance with the present invention.

In at least preferred embodiments the present invention provides improved data processing system communications which may be utilized to create complex data structures for use by remote data services in the transmission of database kernel requests.

While the invention has been particularly shown and described with reference to a preferred embodiment, namely, the communication between two entities in a database management system, it will be understood by those skilled in the art that various changes in form and detail may be made therein without departing from the scope of the invention. For example, the foregoing will find suitable application in any environment in which it is necessary to create and transmit complex data structures between two computer entities.

## Claims

1. A method for creating data structures from multiple data components which include fixed length static components and fixed length dynamic components for transmittal between a server (18,20) and a requester (12,30) in a database management system, said method comprising the steps of:
creating a plurality of data templates (36) each including at least one fixed length static component mapped therein;
creating at least one characteristic table (42,48) having characteristics of at least one fixed length dynamic component stored therein;
accessing a particular one of said plurality of data templates;
accessing said at least one characteristic table to determine the characteristics of said at least one fixed length dynamic component stored therein; and
mapping said at least one fixed length dynamic component into said particular one of said plurality of data templates in accordance with said stored characteristics to create a data structure for transmittal between said server and said requester.

2. A method as claimed in claim 1 wherein said step of creating a plurality of data templates is further characterized as creating selected data templates each including at least one fixed length static component and at least one empty field therein.

3. A method as claimed in claim 2 further including the step of creating a selected characteristic table having characteristics (44,46,50,52) of at least one fixed length dynamic component in association with each of said selected data templates wherein said at least one fixed length dynamic component may be mapped into said at least one empty field to create a data structure for transmittal between said server and said requester.

4. A method as claimed in claim 3, wherein said characteristics stored within said at least one characteristic table includes the location of said at least one empty field within an associated data template wherein said at least one fixed length dynamic component may be mapped.

5. A method as claimed in any preceding claim, wherein said characteristics stored within said at least one characteristic table includes the length of said at least one fixed length dynamic component.

6. A method as claimed in any preceding claim, wherein said characteristics stored within said at least one characteristic table includes the data type of said at least one fixed length dynamic component.

7. A method as claimed in any preceding claim, wherein said characteristics stored within said at least one characteristic table includes a specification of a function which may be utilized to calculate said at least one fixed length dynamic component.

8. The method as claimed in any preceding claim, wherein said characteristics stored within said at least one characteristic table includes an address at which said at least one fixed length dynamic component is located.

9. A method as claimed in any preceding claim, wherein said data structure is transmitted as a result of a particular query by said requester and wherein said particular one of said plurality of data templates is accessed in response to the nature of said particular query.

10. A method as claimed in any of claims 1 to 8, wherein said data structure is transmitted as a result of a particular response by said server and wherein said particular one of said plurality of data templates is accessed in response to the nature of said particular response.

11. A method as claimed in any preceding claim, further including the step of transmitting said particular one of said plurality of data templates after mapping said at least one fixed length dynamic component therein.

12. A method as claimed in claim 11, wherein said multiple data components also include variable length dynamic components and wherein said method further includes the step of transmitting at least one variable length dynamic component in association with said particular one of said plurality of data templates.

13. A data processing apparatus having means for creating data structures from multiple data components which include fixed length static components and fixed length dynamic components for transmittal between a server and a requester in a database management system, comprising:
memory logic storing a plurality of data templates each including at least one fixed length static component map and at least one characteristic table having characteristics of at least one fixed length dynamic component;
means for accessing a particular one of said plurality of data templates, and said at least one characteristic table to determine the characteristics of said at least one fixed length dynamic component stored therein; and
means for mapping said at least one fixed length dynamic component into said particular one of said plurality of data templates in accordance with said stored characteristics to create a data structure for transmittal between said server and said requester.

14. A data processing apparatus as claimed in Claim 13 further including means for selectively accessing a particular one of said plurality of data templates in response to a particular query from said requester.

15. A data processing apparatus as claimed in any of Claims 13 or 14 further including a communications system for transmitting said created data structure.

LOCAL AREA NETWORK

GATEWAY SERVER

LOCAL AREA NETWORK

*Fig. 1*

LENGTH  ~38                    36

X X X X X X X X O O X X X X X X X X X X X X X X X
X X X X O O O O O O O O O O O O O O O O X X X X X
X X X X X X X X X X X X X X X X X X X X X X X X X
X X X X X X X X X X X X X X X X X X X X X X X X X
~40

*Fig. 2*

⌐42

| LOCATION | LENGTH | DATA TYPE | |
|----------|--------|-----------|--|
| 8TH BYTE | 2 | SMALL INTEGER | ~44 |
| 24TH BYTE | 12 | CHARACTER | ~46 |

*Fig. 3*

⌐48

| SOURCE | SOURCE LENGTH | SOURCE DATA TYPE | |
|--------|---------------|------------------|--|
| CONTROL BLOCK1 | 4 | LARGE INTEGER | ~50 |
| FUNCT1 | 12 | CHARACTER | ~52 |

*Fig. 4*

Fig. 5